# EUROPÄISCHE PATENTSCHRIFT

(11) **EP 0 612 460 B1**
(45) Veröffentlichungstag und Bekanntmachung des Hinweises auf die Patenterteilung: **18.07.2001**
(21) Anmeldenummer: 93918907.2
(22) Anmeldetag: 17.08.1993
(51) Int. Cl.: H04Q 7/20

(54) **FUNKÜBERTRAGUNGSVERFAHREN MITTELS EINER ORTSFESTEN BASISSTATION UND EINER VIELZAHL VONEINANDER UNABHÄNGIGER ORTSFESTER TEILNEHMERSTATIONEN**
METHOD FOR RADIO TRANSMISSION USING A FIXED BASE STATION AND A PLURALITY OF INDEPENDENT FIXED SUBSCRIBER STATIONS
PROCEDE POUR TRANSMISSION PAR RADIO EN UTILISANT UNE STATION DE BASE FIXE ET UNE PLURALITE DES POSTES D'ABONNE INDEPENDANTS FIXES

(43) Veröffentlichungstag der Anmeldung: 31.08.1994
(73) Patentinhaber: Q-cell GmbH, 07739 Jena (DE)
(72) Erfinder: Schiffel, Reinhard, D-10119 Berlin (DE); Jäckel, Klaus, D-12627 Berlin (DE); Stadler, Bruno, D-12487 Berlin (DE); Vogel, Holger, D-13156 Berlin (DE)
(74) Vertreter: Zucker, Volker, Dipl.-Ing.
(86) Internationale Anmeldenummer: DE9300766
(87) Internationale Veröffentlichungsnummer: WO9407336

(56) Entgegenhaltungen:
- EP-A- 0 151 281
- EP-A- 0 210 700
- GB-A- 2 208 985
- US-A- 3 202 765
- US-A- 4 528 656
- NACHRICHTENTECHNIK ELEKTRONIK Bd. 42, Nr. 4 , August 1992 , BERLIN,DD; Seiten 130 - 135 XP307185 MANDEL ET AL 'DAL in analog-zellularer Technik'
- NTT REVIEW Bd. 1, Nr. 3 , 1989 , TOKYO,JP; , XP86469 TATSUO KATAYAMA 'RURAL RADIO TELEPHONY SYSTEM'
- RODDY DENIS: "SATELLITEN-KOMMUNIKATION (PAGES 116-120)", , CARL HANSER VERLAG, MÜNCHEN WIEN

## Beschreibung

Die Erfindung betrifft ein Funkübertragungssystem mittels einer ortsfesten Basisstation und einer Vielzahl voneinander unabhängiger ortsfester Teilnehmerstationen.

Zur Nachrichtenübertragung in Systemen mit sternförmiger Betriebsstruktur, die durch eine ortsfeste Basisstation und eine Vielzahl voneinander unabhängiger Teilnehmerstationen gekennzeichnet sind, wobei die Informationsübertragung jeweils von der Basisstation zu den einzelnen Teilnehmerstationen bzw. von den Teilnehmerstationen zur Basisstation erfolgt, werden verschiedene Übertragungsverfahren eingesetzt.

Charakteristisch für derartige Systeme ist in der Regel die Beschränkung des Zugriffs der einzelnen Teilnehmerstationen auf jeweils höchstens einen aus einer größeren Anzahl von Nachrichtenkanälen. Diese Nachrichtenkanäle werden durch Multiplexverfahren kombiniert. Bekannt sind Codemultiplex-, Zeitmultiplex und Frequenzmultiplex-Verfahren.

Beim Codemultiplex-Verfahren werden die Nachrichten durch Basismodulation einem Träger aufmoduliert und das sich ergebende und im Vergleich zur Kanalbreite schmalbandige Signal wird durch Multiplex-Modulation und mit Hilfe eines den Empfänger kennzeichnenden Codewortes auf die Kanalbreite spektral gespreizt.

Die Erkennung des Signals erfolgt anhand der spektralen Codierung. Die im Codemultiplex-Kanal überlagerte Vielzahl von spektralcodierten Nachrichten wird im Empfänger anhand des diesem zugeordneten Codewortes selektiert.

Beim Zeitmultiplex-Verfahren steht jedem Teilnehmer die gesamte Bandbreite eines Funkkanals zur Verfügung, die dieser aber nur zu definierten, kurzen Zeitabschnitten nutzen darf. Die Zeichen oder Zeichenfolgen verschiedener Teilnehmer sind ineinander verschachtelt und werden mit entsprechend höherer Bitrate im einzigen Funkkanal übertragen, wobei der jeweils einem Teilnehmer zugeordnete Zeitkanal sich periodisch mit der Rahmenperiodendauer wiederholt.

Codemultiplex- und Zeitmultiplex-Verfahren werden vorzugsweise für digitale Nachrichtenübertragungssysteme genutzt.

Mit ihrer Anwendung sind praktisch beliebig hohe Störabstände bei der Nachrichtenübertragung im Austausch gegen ein großes Übertragungsband erzielbar.

Sie erfordern eine sehr leistungsfähige und damit gegenwärtig noch teurere digitale Signalverarbeitung vor allem in den Teilnehmerstationen, aber auch in der Basisstation. Aufwendig gestaltet sich beim Zeitmultiplex-Verfahren die notwendige Netzsynchronisation, beim Codemultiplex-Verfahren insbesondere die Codesynchronisation in den Teilnehmerstationen.

Beim Frequenzmultiplex-Verfahren wird die zur Nachrichtenübertragung zur Verfügung stehende Gesamtbandbreite in schmale Frequenzbänder unterteilt, welche jeweils einem Nachrichtenübertragungskanal entsprechen. Für die Dauer der Funkübertragung steht dem Teilnehmer ein solches schmales Frequenzband zur Verfügung.

Frequenzmultiplex-Verfahren sind für analoge oder gemischt analog-digitale Systeme mit mittleren Qualitätsansprüchen dadurch vorteilhaft einsetzbar, daß eine eingeführte kostengünstige Technologie zur Verfügung steht und nur eine relativ geringe Übertragungsbreite benötigt wird.

Für die Anwendung der beschriebenen Multiplex-Übertragungsverfahren in den meisten bisher bekannten derartigen Systemen, insbesondere Funkübertragungssystemen, wurden in beiden Richtungen der Informationsübertragung, d.h. sowohl von der Basisstaion zu den Teilnehmerstationen als auch in der Gegenrichtung, jeweils die gleichen Verfahren genutzt.

Ein solches System wird beispielsweise in der DE-OS 2537683 beschrieben. Die einzelnen Funkkanäle werden als Duplexkanäle im Unter- und Oberband mit vorgegebenem Gegensprechabstand betrieben, wobei alle Kanäle im Frequenzmultiplex angeordnet sind und jeweils den gleichen Kanalabstand voneinander haben.

Ein derartiges Verfahren wird auch bei Mandel, Günter; Kercher, Klaus: DAL in analog-zellularer Technik (Nachrichtentechnik, Elektronik, Berlin 42(1992) beschrieben.

Es wird eine Systemkonfiguration beschrieben, die auf der Ausschreibung der Deutschen Bundespost vom Dezember 1991 zum DAL-System (DAL - drahtlose Anschlußleitung) beruht und unter Nutzung von Komponenten der Mobilfunktechnik NMT-900 (Nordic Mobil Telephony System 900 MHz) aufgebaut ist. In Übereinstimmung mit dem Ausgangssystem NMT-900 und der Ausschreibung der OSP ist das verwendete Übertragungsverfahren im Funkteil des Systems FDM- FDMA (Frequency Division Multiplex/Frequency Division Multiple Access) integriert.

Das aus dieser Druckschrift bekannte Verfahren arbeitet in der Basisstation mit einem FDM in der RF-Ebene, d.h. jedem Kanal der Basisstation ist ein eigener RF- Träger im 900 MHz-Bereich zugeordnet, wobei der nominelle Rastabstand 12,5 kHz beträgt. In der Basisstation ist bei Abstrahlung mehrerer Träger über eine Antenne eine Zusammenführung der RF-Signale der Sender über Combiner erforderlich. Die Combiner- und Filterparameter erlauben nicht, daß unmittelbar benachbarte Träger benutzt werden. Vielmehr ist ein Mindestabstand von 5 Rastern erforderlich, was z.B. bei 90 Kanälen (maximale praktische Realisierung dieses Verfahrens) eine Streuung der Kanalfrequenzen über ein Band von mindestens 5,6 MHz bedeutet. Aufgrund der unsystematischen Frequenzvergabe an die Kanäle ist auch die Frequenzzuweisung an einen Organisationskanal projektspezifisch. Da die Trägerfrequenzen für die Teilnehmergeräte ("Remote Stations") paarig zu den Frequenzen in der Basisstation im Duplexabstand von 45 MHz vergeben werden, ist auch in der Gegenrichtung die Frequenzbelegung entsprechend, obwohl seitens der Teilnehmergeräte keine technischen Gründe für eine solche Steuerung vorliegen. Die Frequenzplanung ist dadurch bei ineinander verschachtelter Belegung der Bänder in einem solchen System mit mehreren Basisstationen unter Beachtung der gegenseitigem Beeinflussungen sehr komplex. In der Basisstation ist bei Abstrahlung mehrerer Träger über eine Antenne, z.B. 94 Kanäle, eine Zusammenführung der RF-Signale der Sender über mindestens zwei Combinerebenen erforderlich, was ca. 6 dB Verluste bedeutet. Quantitativ bedeutet dies, daß bei einer Kanalleistung von 6 Watt an der Antenne die Endstufen der Sender ca. 24 Watt HF-Leistung erbringen müssen, was pro Sender (pro Kanal) unter Beachtung der Wirkungsgrade eine Gleichstromleistung von bis zu 100 Watt zur Folge hat. Physikalischer Hintergrund ist, daß nach den Combinern keine Verstärkung mehr möglich ist, da nach dem Combiner angeordnete Verstärker aufgrund der immer vorhandenen Nichtlinearitäten unzulässige Intermodulationsprodukte erzeugen würden.

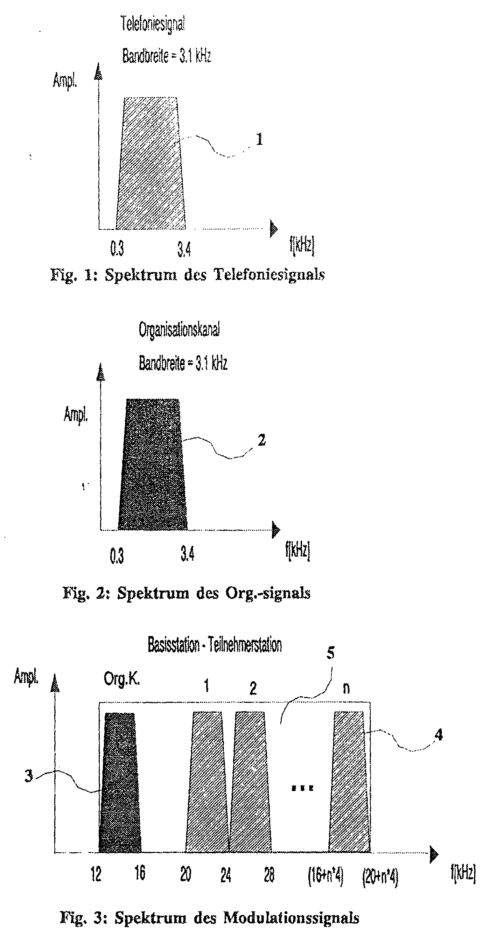

Aus der US 4528656 ist ein Verfahren bekannt, das von einer ähnlichen Aufgabenstellung ausgeht, wie sie eingangs genannt worden ist. Die Ausgestaltung des Verfahrens weist jedoch einige Nachteile auf. Gemäß dieser Druckschrift werden 60 Funkkanäle gebildet, die in Bündeln zu je 6 fest zugewiesenen Kanälen an "Remote Stations" übertragen werden. Damit ist die Zahl der "Remote Stations" von vornherein auf 10 Stück begrenzt, siehe dazu Fig. 2 und Fig. 3, wo die Sub- Group-Modems 22a und 70 miteinander korrelieren, siehe die Beschreibung z. B. Spalte 6, Zeile 62 ff. Der Nachteil dieser Anordnung ist, daß die an eine "Remote Station" angeschalteten Teilnehmer immer nur Zugriff auf die 6 Kanäle haben und hier Blockierungen auftreten können, während im Gesamtsystem noch freie Kanäle vorhanden sind. Quantitativ bedeutet dies, daß bei 6 Kanälen und einem zulässigen Blocking von 1 % pro "Remote Station" nur eine Verkehrslast von 1,9 Erlang bedient werden kann. Bei einem Verkehrswert von 100 mErlang pro Teilnehmer bedeutet dies, daß die Anschaltung von bis zu 19 Teilnehmern an eine "Remote Station" zulässig ist. Eine derartige Anlage könnte daher mit 60 Kanälen 190 Teilnehmer bedienen. Auch bei Erweiterung auf 12 Kanäle pro "Remote Station", die in der Entgegenhaltung als potentielle Möglichkeit benannt ist, würde der Nachteil der geringen Kapazität nicht beseitigt werden. Quantitativ bedeutet dies nämlich, daß bei 12 Kanälen und einem zulässigen Blockierungsgrad von 1 % pro "Remote Station" eine Verkehrslast von 5,8 Erlang bedient werden kann. Bei einem Verkehrswert von 100 mErlang pro Teilnehmer bedeutet dies, daß die Anschaltung von bis zu 58 Teilnehmern an eine "Remote Station" zulässig ist. Eine derartige Anlage könnte daher mit 120 Kanälen real nur 580 Teilnehmer bedienen. Die Verfahrenslösung gemäß der Druckschrift beinhaltet keinen Organisationskanal. Dies ist dadurch bedingt, daß es verfahrensbedingt keinen Kanal gibt, und geben kann, auf den alle "Remote Stations" zugreifen können. Die bekannte Verfahrensweise benötigt auch keinen Organisationskanal. Dies ist bedingt dadurch, daß die jeweils 6 Funkkanäle den "Remote Stations" stationär zugewiesen sind und damit kein Accessverfahren im Funkbereich erfolgt, das einen derartigen Organisationskanal erfordern würde. Die Accessprobleme sind bei der Entgegenhaltung zu der Schnittstelle zwischen "Remote Stations" und dem angeschlossenen Teilnehmerpool verlagert.

Mit der noch im einzelnen zu beschreibenenden erfindungsgemäßen Verfahrensweise können beispielsweise 120 Kanäle gebildet werden, die noch nicht fest bestimmten Teilnehmergeräten ("Remote-Stations") zugewiesen werden. Dadurch läßt sich erreichen, daß weitaus mehr "Remote-Stations" existieren und bedient werden, als durch diese Kanalzahl ausgewiesen ist. Daher erfordert die erfindungsgemäße Verfahrensweise ein Accessverfahren im Funkbereich und damit auch einen Organisationskanal. Vorteilhaft ist dabei, daß durch diese Verfahrensweise die "Remote Stations" immer Zugriff auf das gesamte Bündel der 120 Kanäle haben. Quantitativ bedeutet dies, daß bei 120 Kanälen und einem zulässigen Blocking von 1 % pro Basisstation eine Verkehrslast von 103 Erlang bedient werden kann. Bei einem Verkehrswert von 100 mErlang pro Teilnehmer bedeutet dies, daß die Anschaltung von bis zu 1030 Teilnehmern an eine Basisstation zulässig ist. Während somit bei der Entgegenhaltung die Konzentrationsfunktionalität in der "Remote Station" realisiert wird, die dann nach der Konzentration auf 6 Kanäle die Übertragung über die zugewiesenen und immer (aber ausschließlich) zur Verfügung stehenden 6 Funkkanäle durchgeführt wird, erfolgt bei der erfindungsgemäßen Verfahrensweise die Konzentrationsfunktionalität mit Hilfe des Organisationskanals im Interface (Luftschnittstelle, d.h. im Funkbereich).

Ebenfalls sind derartige Übertragungsverfahren beispielsweise aus der Trägerfrequenztechnik und aus der Richtfunktechnik bekannt. Im Gegensatz zu den hier betrachteten Systemen erfolgt aber dabei in der Regel eine Punkt-zu-Punkt-Informationsübertragung zwischen zwei ortsfesten Basisstationen, wobei jeweils eine größere Anzahl von Nachrichtenkanälen gebündelt übertragen werden.

Aus der DE-OS 3447107 ist ein digitales Nachrichtenübertragungsverfahren für zellulare Netze bekannt, bei dem für Hin- und Rückrichtung des Nachrichtenübertragungskanals jeweils ein anderes Modulationsverfahren angewandt wird. Zur Nachrichtenübertragung greifen die mobilen Teilnehmerstationen auf einen aus einer Vielzahl von Nachrichtenkanälen zu.

In der Richtung von der ortsfesten Basisstation zu den Teilnehmerstationen ist jeder Nachrichtenkanal durch Spreizmodulation gespreizt. Die gespreizten Nachrichtenkanäle werden einander überlagert und das dadurch erhaltene breitbandige Summensignal wird in einem gemeinsamen Frequenzband übertragen.

In der Richtung von den Teilnehmerstationen zur Basisstation erfolgt die Nachrichtenübertragung in voneinander getrennten, schmalbandigen Frequenzkanälen.

Als Multiplexverfahren wird Codemultiplex favorisiert, das mit einer binären Spreizmodulation kombiniert wird. Dieses Verfahren hat insbesondere Vorteile hinsichtlich der Störsicherheit in mobilen Funknetzen. Die konkret zur Anwendung kommende Spreizmodulation kann vor Übertragungsbeginn variiert werden.

Verschiedene Maßnahmen, wie Nutzung unterschiedlicher Spreizmodulationsarten, unterschiedlicher Frequenzbänder, unterschiedlicher Zeitkanäle, eingeschränkter Kanalzahlen bzw. Kanalfrequnzen dienen der Stördrückung zwischen benachbarten Funkzellen.

Aus der DE-OS 3527331 ist ein Übertragungsverfahren bekannt, das in beiden Übertragungsrichtungen des digitalen Funksystems unterschiedliche Kombinationen von Multiplexverfahren für die Bündelung von Nachrichtenkanälen anwendet. In der Übertragungsrichtung von der Basisstation zu den Teilnehmerstationen wird die zu sendende Nachricht unter Anwendung der Kombination von Codemultiplex-, Zeitmultiplex- und Frequenzmultiplex-Verfahren wieder demultiplext. Die Übertragungsrichtung von den Teilnehmerstationen zur Basisstation erfolgt in voneinander getrennten, schmalbandigen Frequenzkanälen, oder in Zeitkanälen, oder in voneinander getrennten Codebenen oder deren Kombinationen. Bei eingeschränktem Verkehrsaufkommen werden Bündelungsverfahren unter ausschließlicher Anwendung des Zeitmultiplex- bzw. Unter Kombination von Zeitmultiplex- und Codemultiplex-Verfahren vorgeschlagen. Eine Umsetzung auf Trägerfrequenzen wird ebenfalls diskutiert.

Der Erfindung liegt daher das technische Problem zugrunde, ein Funkübertragungsverfahren zu schaffen, mit dem eine vorhandene HF-Bandbreite frequenzökonomisch ausgenutzt wird, möglichst geringe Leistungsanforderungen an die zuvor verwendeten Bauteile stellt und einfach an verschiedene Kanalbedarfsanforderungen anpaßbar ist.

Die Lösung dieses technischen Problems ergibt sich durch den Gegenstand mit den Merkmalen des Patentanspruchs 1. Weitere vorteilhafte Ausgestaltungen der Erfindung ergeben sich aus den Unteransprüchen.

Einzelheiten der Erfindung sind anhand der in Zeichnungen dargestellten Zusammenhänge näher beschrieben. Es zeigen:
- Fig. 1: das Frequenzspektrum des zu übertragenden Telefoniesignals,
- Fig. 2: das Frequenzspektrum des Organisationssignals,
- Fig. 3: das Spektrum des modulierten Signals für die Übertragung von der Basisstation zur Teilnehmerstation,

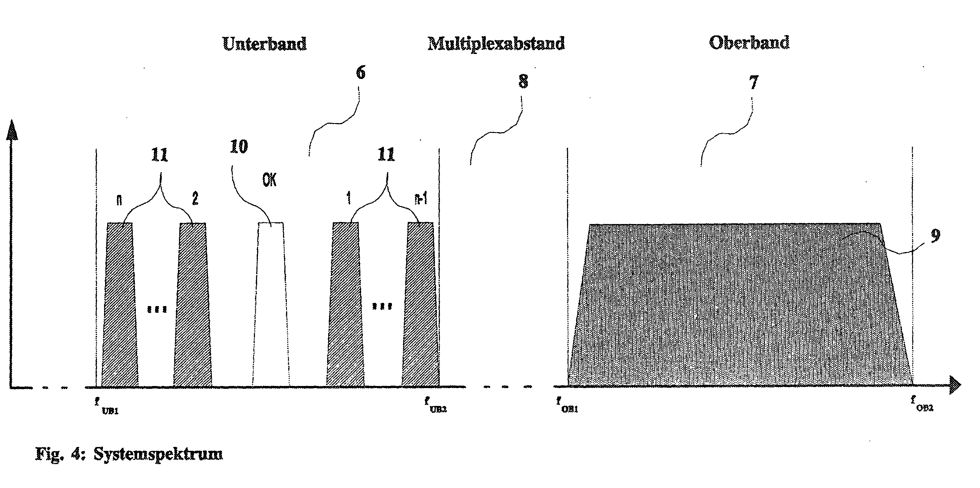

- Fig. 4: das Frequenzspektrum eines Gesamtsystems.

Die Bildung von Nachrichtenkanälen erfolgt im System derart, daß jeweils nur nach Anforderung höchstens ein Duplex-Nachrichtenkanal pro Teilnehmerstation bereitgestellt wird, wodurch eine ökonomische Realisierung durch Anpassung an das mittlere Verkehrsaufkommen erreicht wird. Sowohl die Basisstation als auch die Teilnehmerstationen sind sehr kostengünstig herstellbar.

Die Möglichkeit der Übertragung von Signalisierungen von der Basisstation zu den Teilnehmern bzw. gegebenenfalls mit Einschränkungen auch in Gegenrichtung soll vorhanden sein.

Die Basisstation hat eine Kapazität von n schmalbandigen Nachrichtenkanälen 1, die für analoge oder digitale Nachrichtenübertragung genutzt werden können, z.B. für Fernsprechverkehr mit Gegensprechmöglichkeit.

In der Basisstation werden diese Kanäle sendeseitig derart aufbereitet, daß sie ein Frequenzmultiplex-Signal 3, 4 bilden. Dieses Multiplex-Signal wird vorzugsweise mit einer Winkelmodulation auf einen HF-Träger 9 aufgeprägt und über eine Antenne in einem breitbandigen Funkkanal 7 abgestrahlt.

In der Übertragungsrichtung von der Teilnehmerstation zur Basisstation senden die Teilnehmerstationen in jeweils frequenzmäßig verrschiedenen schmalbandigen Kanälen 6. Durch Anwendung der Winkelmodulation sind auch hier die Anforderungen an die HF-Baugruppen minimierbar.

Die Übertragung von Signalisier- und Steuerbefehlen erfolgt je nach Systemgröße entweder multiplex in einem normalen Nachrichtenkanal oder in einem speziellen Organisationskanal 2. Gegenüber bekannten Verfahren weist diese Methode den Vorteil auf, daß lediglich bei der Aufbereitung des Multiplexsignals in der NF- bzw. TF-Ebene des Senders der Basisstation höchste Anforderungen an die Intermodulationswerte der Baugruppen und an die Stabilität der Frequenzaufbereitung zu stellen sind. Extrem lineare HF-Verstärker oder aufwendige Kombinerschaltungen mit großem Leistungs- und Platzbedarf sowie relativ teure VHF- bzw. UHF-Syntheser werden auf diese Weise vermieden.

In den Empfängern der Teilnehmerstationen erfolgt gleichfalls eine Verlagerung der Anforderungen bezüglich der Großsignalfestigkeit, der Linearität und der Frequenzstabilität vom HF-Teil zur TF-/NF-Ebene.

Die Sender der Teilnehmerstatioenen und der Empfänger der Basisstation unterscheiden sich nicht von den entsprechenden Baugruppen in bekannten derartigen Funkübertragungssystemen.

Auf Grund der speziellen elektromagnetischen Wellenausbreitungsbedingungen im HF-Bereich können Interferenzprobleme durch Mehrwegausbreitung auftreten, die besonders bei großen Bandbreiten und unter mobilen Bedingungen mit relativ kleinen effektiven Antennenhöhen zu beachten sind. Deshalb wird ein Einsatz im wesentlichen für nicht zu große Kanalzahlen und ortsfeste Teilnehmerstationen vorgeschlagen.

Ein derartiges Funkübertragungssystem kann derart ausgeführt werden , daß in der Basisstation die Signalaufbereitung im Sendeteil wie folgt vorgenommen wird.

Jeder Nachrichtenkanal 1 wird auf einen ersten Modulator gegeben, der ein Einseitenbandsignal 3, 4 erzeugt, das in eine spezifische Frequenzlage im NF-bzw. TF-Bereich gebracht wird. Die einzelnen Nachrichtenkanäle haben dann einen festen Frequenzabstand (Raster) untereinander. Sie werden anschließend summiert und bilden ein Frequenzmultiplex-Signal.

Sind die Nachrichtenkanäle 1 z.B. analoge Fernsprechkanäle mit einer Bandbreite von 0.3 - 3.4 kHz, so kann das resultierende Frequenzmultiplex-Signal beispielsweise mit 4 kHz Kanalabstand beginnend ab z.B. 40 kHz angeordnet sein. Für 60 Kanäle würde eine Bandbreite des Multiplex-Signals bis 280 kHz benötigt werden.

Derartige Signale sind beispielsweise in der Trägerfrequenztechnik oder als Basisbandsignal in der Rundfunktechnik bekannt.

Die Verfahren zur Erzeugung dieser Signale sind als hinlänglich bekannt vorauszusetzen. Besondere technische Forderungen bestehen hinsichtlich der spektralen Reinheit des Multiplex-Signals durch Sicherung einer geringen Beeinflussung der Nachrichtenkanäle untereinander. Intermodulation, ungewollte Mischprodukte sowie Rauschstörungen begrenzen die maximal mögliche Kanalzahl und den erreichbaren Störabstand pro Kanal, wobei durch die Höhe des schaltungstechnischen Aufwands eine fließende Grenze gegeben ist.

Das derartig aufbereitete Multiplexsignal wird einem Phasen- oder Frequenzmodulator zugeführt, wodurch ein HF-Träger 9 breitbandig im Verhältnis zum einzelnen Nachrichtenkanal 1 moduliert wird. Anschließend kann das Signal in einer nicht notwendig linearen Endstufe auf die erforderliche Sendeleistung verstärkt und über eine Antenne abgestrahlt werden. Das gesendete Signal 9 belegt mindestens die doppelte Bandbreite im Vergleich zum Multiplexsignal. Sendeleistung und belegte HF-Bandbreite können entsprechend einem vorgegebenen Störabstand über den zu wählenden Modulationsindex gegeneinander ausgetauscht werden.

Eine Art bisher bekannter Verfahren benötigt relativ teure VHF- bzw. UHF-Syntheser sowie einen HF-Verstärker pro Nachrichtenkanal bei Bildung des Multiplexsignals über platzaufwendige, teure und eine wesentlich größere HF-Leistung pro Kanal erfordernde Kombinerschaltungen oder aber eine Antenne pro Kanal.

Andere Verfahren, die in der Basisstation mit einem HF-Leistungsverstärker und einer Sendeantenne arbeiten, brauchen einen extrem linearen HF-Leistungsverstärker, um die erforderliche Intermodulationsarmut zu erreichen. Beiden Verfahren ist gemeinsam, daß die mögliche Zahl der Nachrichtenkanäle relativ klein ist.

Im Empfänger der Teilnehmerstation sind an den HF-Teil relativ geringe Anforderungen bezüglich der Linearität und Frequenzstabilität zu stellen. Diesen Erfordernissen ist erst bei der Signalmodulation und bei der Selektion/ Demodulation des gewünschten Nachrichtenkanals in der TF-/NF-Ebene Rechnung zu tragen.

Wenn das Verkehrsaufkommen pro Teilnehmer zeitbegrenzt ist, können mit einem solchen Funkübertragungssystem wesentlich mehr Teilnehmer versorgt werden, als Nachrichtenkanäle vorhanden sind (Bündelkanäle, multiple access).

Für die dazu erforderlichen Organisations-, Signalisierungs- und Kontrollprozesse im System wird ein digitaler Organisations- bzw. Dienstkanal 2 in der Übertragungsrichtung von der Basisstation zum den Teilnehmerstationen vorgeschlagen. Dieser Organisationskanal wird von einer Prozeßsteuereinheit der Basisstation beschickt und ist von den Teilnehmergeräten empfangbar, so daß Signalisierungen zum Beginn einer Nachrichtenübertragung, Frequenzzuweisungen von freien Nachrichtenkanälen, systeminterne Mitteilungen usw. für die entsprechenden Teilnehmer bereitgestellt werden können.

Der Organisationskanal wird dabei in das Frequenzmultiplex-Signal der Basisstation frequenzmäßig getrennt von den Nachrichtenkanälen 3 eingebunden und nach der HF-Modulation in einem gemeinsamen Frequenzband mit den Nachrichtenkanälen übertragen. In den Teilnehmergeräten steht der Organisationskanal nach der Signalmodulation zur Verfügung.

In der Übertragungsrichtung von den Teilnehmerstationen zur Basisstation erfolgt die Übermittlung von Organisationsinformationen in einem eigenständigen schmalbandigen Funkkanal 10, der gleiche Parameter wie ein Nachrichtenkanal 11 haben kann. Um Kollisionen zwischen den Sendungen unterschiedlicher Teilnehmerstationen zu verhindern, arbeiten die einzelnen Teilnehmerstationen im Zeitmultiplexbetrieb auf den Organisationskanal.

In das Multiplexsignal des Basisstationssenders kann ein Pilotsignal eingefügt werden. Dieses Piltosignal kann in den Teilnehmerstationen für verschiedene Kontrollzwecke dienen, wie z.B. Signal-Rausch-Verhältnis, und/ oder als Steuersignal für die Taktgewinnung, -nachführung sowie die Frequenznachstimmung der Teilnehmerstationen. Auf diese Art und Weise ist eine einfache Synchronisation des gesamten Systems möglich. Zum anderen wird der Aufwand hinsichtlich der erforderlichen Stabilität der Frequenzaufbereitung in den Teilnehmerstationen wesentlich reduziert, da eine Anbindung an eine hochstabile Kalibrierquelle der Basisstation erfolgen kann.

Die Empfangsteile der Teilnehmerstationen werden vorteilhaft so ausgeführt, daß hinter dem Demodulator für das breitbandige Empfangssignal ein Demultiplexer angeordnet wird. Dieser Demultiplexer stellt an seinem Ausgang den Organisationskanal permanent zur Verfügung. Weiterhin wird an anderen Ausgängen das Pilotsignal und je nach Anforderungen ein Nachrichtenkanal bereitgestellt.

Eine solche Anordnung erlaubt den Empfang von Signalisierungen und Steuerbefehlen parallel zur eigentlichen Nachrichtenübertragung und kann so die Systemeigenschaften wirkungsvoll verbessern, z.B. zum Frequenzwechsel bei gestörten Funkkanälen, zur Übertragung von Zusatzinformationen, für Synchronisierzwecke usw. Der schaltungstechnische Aufwand ist verhältnismäßg gering, da nach wie vor lediglich ein HF-Eingangsteil und Demodulator für den gesamten Empfänger benötigt wird. Die Parallelverarbeitung erfolgt erst hinter dem Demultiplexer auf der NF-/TF-Ebene. Ein derartiger Teilnehmerempfänger kann auch das Datensignal des permanent empfangenen Organisationskanals für Zwecke der Taktgewinnung, - nachführung sowie für die Frequenznachstimmung der Teilnehmerstationen nutzen. Voraussetzung hierfür ist ein hochstabiler Datentakt des Organisationskanals mit einer geeigneten Codierung, wobei die Extraktion entsprechender Spektrallinien als Steuergrößen für die Frequenzaufbereitung der Teilnehmerstationen dient. Die Basisstation und auch die Teilnehmerstationen müssen keine unmittelbaren Nachrichtenquellen bzw. Nachrichtensenken sein. Die Basisstation kann z.B. an das öffentliche Fernsprechnetz über Standleitungen angeschlossen werden bzw. direkt an eine Vermittlungsstelle gekoppelt werden. Die Teilnehmerstationen können beispielsweise als Nebenstellenanlagen oder als Anschlußstelle für Teilnehmerendgeräte fungieren. Ebenso sind Übergänge zu anderen öffentlichen oder nichtöffentlichen Funk- oder Leitungsnetzen möglich.

Der erforderliche Informationsaustausch, Organisations-, Steuerungs- und Signalisierungsvorgänge können dann von einer speziellen Prozeßsteuereinheit vorgenommen werden.

## Patentansprüche

1. Funkübertragungsverfahren mittels einer ortsfesten Basisstation und einer Vielzahl voneinander unabhängiger ortsfester Teilnehmerstationen, bei welchem auf einer Vielzahl von Funkkanälen zwischen der Basisstation und den Teilnehmerstationen analoge Signale mit einer für den Fernsprechbetrieb ausreichenden Basissignalbandbreite, insbesondere zur Übertragung des üblichen Fernsprech-Frequenzspektrums von 300 Hz bis 3400 Hz, im Duplexbetrieb übertragen werden können, wobei für die beiden Übertragungsrichtungen unterschiedliche Übertragungsverfahren verwendet werden und die Anzahl der Funkkanäle kleiner als die Gesamtzahl der Telnehmerstationen ist und jede Teilnehmerstation zu einem Zeitpunkt immer nur Zugriff auf einen Duplex-Funkkanal hat und eine direkte Übertragung zwischen Teilnehmerstationen ausgeschlossen ist, wobei für systeminterne Signalisierungs- und Organisationszwecke sowie zum Verbindungsaufbau in beiden Übertragungsrichtungen je ein Kanal als Organisationskanal (2, 10) genutzt wird, die bezüglich ihrer physikalischen Parameter mit den Nachrichtenkanälen (1, 11) in den jeweiligen Übertragungsrichtungen identisch sind, und in welchen digitale Informationen im Zeitmultiplexbetrieb übertragen werden, umfassend folgende Verfahrensschritte:
a) in der Basisstation umsetzen der Signale der einzelnen Nachrichtenkanäle (1) auf kanalspezifische Trägerfrequenzen durch Einseitenbandmodulation mit unterdrücktem Träger zur Erzeugung von Einseitenbandsignalen (4), wobei die schmalbandigen kanalspezifischen Trägerfrequenzen um einen festen Frequenzraster zueinander versetzt ausgewählt werden,
b) aufsummieren der Einseitenbandsignale (4) und des Organisationskanals (2) zu einem FDM-Basisband (5),
c) durchführen einer Winkelmodulation des FDM-Basisbandes (5) auf eine HF-Trägerfrequenz,
d) verstärken des breitbandig-modulierten HF-Trägersignals (9) und abstrahlen des verstärkten HF-Trägersignals (9) über eine Antenne an die Teilnehmerstationen,
e) für die Übertragungsrichtung von den Teilnehmerstationen zu der Basisstation aufmodulieren der Signale auf einen kanalrasterspezifischen HF-Träger, so daß das modulierte HF-Trägersignal einen Nachrichtenkanal (11) bildet, wobei die Teilnehmerstationen in jeweils frequenzmäßig verschiedenen Nachrichtenkanälen (11) senden und
f) verstärken und abstrahlen des Nachrichtenkanals (11) über eine Antenne an die Basisstation.

2. Funkübertragungsverfahren nach Anspruch 1, dadurch gekennzeichnet, daß in der Übertragungsrichtung von der Basisstation zu den Teilnehmerstationen der als Einseitenbandsignal (3) mit unterdrücktem Träger aufbereitete Organisationskanal (2) als Kanal 0 mit der niedrigsten Frequenz in das FDM Basisband (5) eingeordnet ist.

3. Funkübertragungsverfahren nach Anspruch 1 oder 2, dadurch gekennzeichnet, daß in der Übertragungsrichtung von den Teilnehmerstationen zur Basisstation der Organisationskanal (10) als Kanal 0 in der Mitte eines zu nutzenden Frequenzbandes (f_{UB1}-f_{UB2}) angeordnet ist und die Nachrichtenkanäle (11) als Kanäle 1, 2, 3... bis zur Maximalzahl sich alternierend oberhalb und unterhalb dieser Mittenfrequenz anschließen.

4. Funkübertragungsverfahren nach einem der vorangegangenen Ansprüche, dadurch gekennzeichnet, daß in der Basisstation ein Pilotsignal generiert wird, das in das Multiplexsignal der Basisstation eingefügt wird.

## Claims

1. Method for radio transmission using a fixed base station and a plurality of independent fixed subscriber's stations, in which analog signals having a band width of the base signal being sufficient for telephone communication, in particular for the transmission of the standard telephone frequency spectrum from 300 Hz to 3 400 Hz are allowed to be transmitted by means of the duplex operation on a plurality of radio channels between the base station and the subscriber's stations, wherein different transmission methods are used for the two transmission directions and the number of said radio channels is smaller than the total number of the subscriber's stations and each subscriber's station merely accesses to one duplex radio channel at one moment and a direct transmission between the subscriber's stations is excluded, wherein for the intrasystem purposes of signalling and organization, and for the connection build-up in both transmission directions as well one channel each is used as an executive channel (2, 10) which are identical to the communication channels (1, 11) with respect to its physical parameters in the respective transmission directions, and in which digital information is transmitted in the time-division multiplexing, including the following steps:
a) converting the signals of the individual communication channels (1) inside said base station into channel specific carrier frequencies by means of single-sideband modulation with a suppressed carrier for generating single-sideband signals (4), wherein said narrow-band channel specific carrier frequencies will be selected in a staggered manner to each other by a fixed frequency separation,
b) adding up said single-sideband signals (4) and said executive channel (2) to an FDM baseband (5),
c) performing an angular modulation of said FDM baseband (5) onto an HF carrier frequency,
d) amplifying the broadband modulated HF carrier signal (9), and radiating said amplified HF carrier signal (9) via an antenna to said subscriber's stations,
e) for the transmission direction from said subscriber's stations to said base station, modulating the signals onto a channel raster specific HF carrier such that said modulated HF carrier signal forms a communication channel (11), wherein said subscriber's stations broadcast in respective frequency-related different communication channels (11), and
f) amplifying and radiating said communication channel (11) via an antenna to said base station.

2. Method for radio transmission according to claim 1 characterized in that, in the transmission direction from said base station to said subscriber's stations, said executive channel (2) processed as a single-sideband signal (3) with a suppressed carrier is allocated into said FDM baseband (5) as a channel 0 having the lowest frequency.

3. Method for radio transmission according to claims 1 or 2 characterized in that, in the transmission direction from said subscriber's stations to said base station, said executive channel (10) is positioned as a channel 0 in the middle of a frequency band (f_{UB1} -f_{UB2}) to be used, and said communication channels (11) alternately follow above and below of said center frequency as channels 1, 2, 3 ... up to the maximum number.

4. Method for radio transmission according to one of the preceding claims characterized in that in said base station a pilot signal is generated which is inserted into the multiplex signal of said base station.

## Revendications

1. Procédé de transmission radio au moyen d'une station de base fixe et d'une pluralité de postes d'abonnés indépendants fixes permettant la transmission en duplex de signaux analogiques à largeur de bande du signal de base suffisante pour l'exploitation téléphonique sur une pluralité de canaux radio entre la station de base et les postes d'abonnés, plus spécifiquement destiné à la transmission du spectre de fréquences téléphoniques usuel de 300 Hz à 3400 Hz, des procédés de transmission différents étant employés pour les deux sens de transmission et le nombre de canaux radio étant inférieur à la totalité des postes d'abonnés, chaque poste d'abonné n'ayant, à un instant donné, toujours accès qu'à un seul canal radio duplex et une transmission directe entre des postes d'abonnés étant exclue, un canal étant employé comme canal d'organisation (2, 10) à chacune des fins de signalisation et d'organisation en circuit interne ainsi que de câblage dans les deux sens de transmission, ces canaux d'organisation étant, quant à leurs paramètres physiques, identiques aux voies de transmission (1, 11) dans les sens de transmission respectifs et dans lesquels des informations numériques sont transmises par multiplexage temporel, ledit procédé comprenant les étapes suivantes:
a) dans la station de base, convertir des signaux des différentes voies de transmission (1) en fréquences porteuses spécifiques du canal par modulation à bande latérale unique avec porteuse supprimée en vue de la production de signaux BLU (4), les fréquences porteuses à bande étroite spécifiques du canal étant choisies placées en quinconce autour d'une grille fixe de fréquences,
b) additionner les signaux BLU (4) et le canal d'organisation (2) en vue de l'obtention d'une bande de base FDM (5),
c) effectuer une modulation angulaire de la bande de base FDM (5) en une fréquence porteuse H.F.,
d) amplifier le signal porteur H.F. (9) modulé en large bande et rayonner le signal porteur H.F. (9) amplifié aux postes d'abonnés en le faisant passer à une antenne,
e) moduler les signaux en porteuse H.F. spécifique d'une grille de canaux pour le sens de transmission allant des postes d'abonnés à la station de base de sorte que le signal porteur H.F. modulé constitue une voie de transmission (11), les postes d'abonnés émettant dans des voies de transmission (11) ayant chacune des fréquences différentes et
f) amplifier et rayonner la voie de transmission (11) à la station de base en la faisant passer à une antenne.

2. Procédé de transmission radio selon la revendication 1, caractérisé en ce que, dans le sens de transmission allant de la station de base aux postes d'abonnés, le canal d'organisation (2) traité en signal BLU (3) avec porteuse supprimée est incorporé à la bande de base FDM (5) en tant que canal 0 à la fréquence la plus basse.

3. Procédé de transmission radio selon la revendication 1 ou 2, caractérisé en ce que, dans le sens de transmission allant des postes d'abonnés à la station de base, le canal d'organisation (10) est disposé en tant que canal 0 au centre d'une bande de fréquence (f_{UB1}-f_{UB2}) à utiliser et que les voies de transmission (11) s'ajoutent en alternance au-dessus et en-dessous de cette fréquence centrale en tant que canaux 1, 2, 3... jusqu'à atteindre le chiffre maximal.

4. Procédé de transmission radio selon l'une des revendications précédentes, caractérisé en ce qu'un signal pilote est généré dans la station de base et est intégré dans le signal multiplex de la station de base.
